# EUROPÄISCHE PATENTANMELDUNG

(11) **EP 0 987 806 A2**
(43) Veröffentlichungstag der Anmeldung: **22.03.2000**
(21) Anmeldenummer: 99117359.2
(22) Anmeldetag: 03.09.1999
(51) Int. Cl.: H02H 7/12, H02M 3/155

(54) **Überspannungsabschaltung**

(30) Priorität: 16.09.1998 DE 19842444
(71) Anmelder: SIEMENS AKTIENGESELLSCHAFT, 80333 München (DE)
(72) Erfinder: Bröckling, Hans-Josef, 33161 Hövelhof (DE)

(57) **Zusammenfassung**

Überspannungsabschaltung in einem Abwärts-Schaltspannungswandler mit einem am Verbindungspunkt von Schalttransistor und Induktivität angreifenden Kurschlußtransistor, welcher im Überspannungsfall leitend gesteuert wird, solange die Ausgangsspannung eine vorgegebene Vergleichsspannung nicht unterschreitet.

## Beschreibung

### Technisches Gebiet

Die Erfindung betrifft eine Überspannungsabschaltung in einem Schaltnetzteil, bei der ein negativer Spannungsimpuls vermieden wird.

### Stand der Technik

Für die Versorgung von elektronischen Schaltungen sind Schaltspannungswandler weit verbreitet, insbesondere Abwärts-Wandler, bei denen ein Schalttransistor in Serie mit einer Induktivität liegt und die Verbindung beider über eine Diode mit Masse verbunden ist.

Bei Abwärtswandlern besteht ein Problem dahingehend, daß ein Versagen des Schalttransistors häufig zu dessen Kurzschluß und damit zu einer Überspannung am Ausgang führt. Daher ist dieser Typ mit einer Überspannungsüberwachung ausgestattet, die im Fehlerfall einen Kurzschluß am Schalttransistor bewirkt und damit sowohl eine Überspannung verhindert als auch indirekt eine Schmelzsicherung vor dem Schalttransistor zum Auslösen bringt.

Dabei entsteht jedoch das Problem, daß durch die Entladung des Siebkondensators am Ausgang eine Schwingung einsetzt, die zu einer inversen Spannung am Ausgang führt. Diese jedoch kann ähnlich wie eine Überspannung die zu versorgende Elektronik schädigen.

Aufgabe der Erfindung ist es daher, bei einer Überspannungsabschaltung in einem Abwärts-Schaltwandler eine inverse Ausgangsspannung zu vermeiden.

Die Erfindung verwendet hierzu einen Vergleicher, der beim Absinken der Ausgangsspannung unter einen vorgegebenen Wert den Kurzschluß des Quertransistors aufhebt und so die Energie z.B. in die Speisepannungsquelle entlädt.

Es handelt sich also um eine Überspannungsabschaltung in einem Abwärts-Schaltspannungswandler mit einem am Verbindungspunkt von Schalttransistor und Induktivität angreifenden Kurschlußtransistor, welcher im Überspannungsfall leitend gesteuert wird, solange die Ausgangsspannung eine vorgegebene Vergleichsspannung nicht unterschreitet.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

### Kurzbeschreibung der Zeichnungen

Es zeigen
- Fig. 1: ein Prinzipschaltbild der für die Erfindung wesentlichen Teile eines Abwärts-Schaltspannungswandlers und
- Fig. 2: Spannungsverläufe für die Schaltung nach Fig. 1.

### Beschreibung einer Ansführungsform der Erfindung

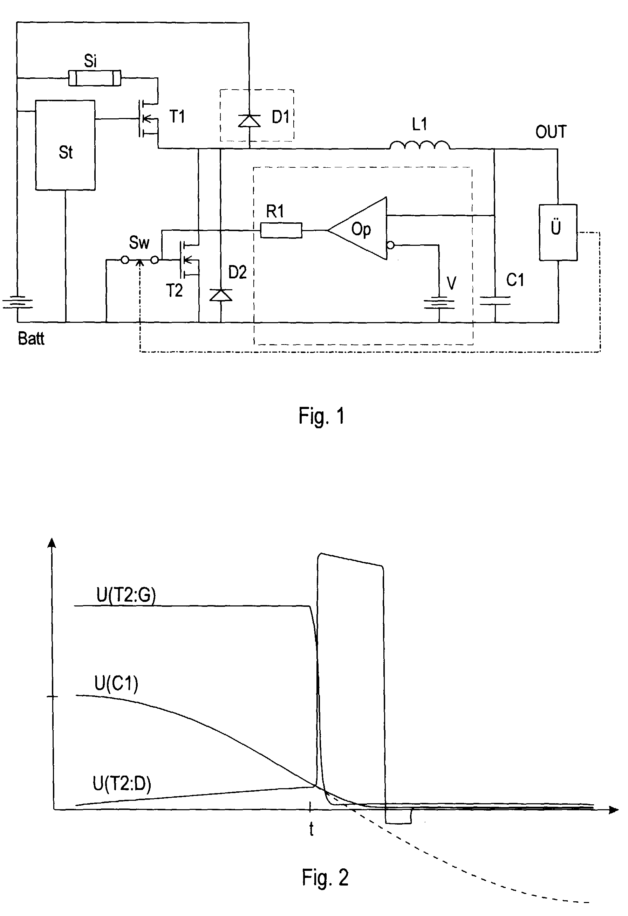

In Fig. 1 ist schematisch ein SchaltspannungsAbwärtswandler gezeigt, wobei der gestrichelt eingerahmte Teil zu der Erfindung gehört und daher zunächst nicht beachtet werden soll.

Eine nicht stabilisierte Versorgungsspannung Batt von z.B. 10 V ist mit einem Schalttransistor T1 verbunden. Dieser liegt in Serie mit einer Induktivität L1 zwischen Versorgungsspannung Batt und einem Siebkondensator C1, an welchem die Ausgangsspannung OUT z.B. 5V abgegriffen wird. Eine Steuerschaltung St bekannter Art erzeugt am Gate von T1 ein pulsweitenmoduliertes Signal derart, daß die gewünschte Ausgangsspannung am Ausgang OUT anliegt. Dabei steigt während der Einschaltphase des Schalttransistors T1 der Strom durch die Induktivität L1 an. Wird der Schalttransistor T1 ausgeschaltet, dann übernimmt eine Freilaufdiode D2 den Strom durch die Induktivität L1, welcher, da die Spannung an der Induktivität L1 umgepolt ist, stetig abnimmt.

Es besteht bei Schaltreglern dieser Art die Gefahr, daß bei einem Versagen des Schalttransistors dieser einen Kurzschluß darstellt und damit an dem Ausgang eine Überspannung anliegt. Es ist daher bekannt, eine Überspannungsüberwachung Ü vorzusehen, welche im Überspannungsfall die Spannung am Schalttransistor kurzschließt. Damit wird der Strom durch den Schalttransistor T1 solange abgeleitet, bis eine (Schmelz-) Sicherung Si zwischen der Versorgungsspannung Batt und dem Schalttransistor T1 anspricht. Dieser Kurzschluß erfolgt häufig durch einen Thyristor vor dem Schalttransistor. Von der Erfindung wird jedoch, wie in Fig. 1 gezeigt, ein Kurzschlußtransistor T2 verwendet, welcher parallel zur Diode D2 liegt.

Diese Lösungen führen zwar zu einer zuverlässigen Vermeidung einer Überspannung am Ausgang OUT. Sobald jedoch die Schmelzsicherung Si anspricht und im Ausgangskondensator C1 noch eine Ladung gespeichert ist, fließt ein Strom aus dem Ausgangskondensator C1 in Gegenrichtung durch die Induktivität L1, bis der Ausgangskondensator entladen ist. Die danach in der Induktivität L1 gespeicherte Energie führt dann jedoch zu einer inversen Aufladung des Ausgangskondensators C1, wie sie in Fig. 2 gestrichelt angedeutet ist. Damit entsteht an dem Ausgang OUT eine negative Spannung, die die dort angeschlossenen Bauelemente beschädigen kann.

In der Fig.2 ist die Spannung am Ausgangskondensator C1 als U(C1), die Spannung am Drain des Kurzschlußtransistors T2 als U(T2:D) und die Spannung an dem Gate des Kurzschlußtransistors T2 als U(T2:G) bezeichnet.

Zur Überwindung des genannten Nachteils ist die in Fig. 1 gestrichelt eingerahmte Schaltung vorgesehen. Sie besteht aus einem Vergleicher Op, welcher die Ausgangsspannung OUT von im Beispiel 5V mit einer Vergleichsspannung V von im Beispiel 0.5V vergleicht. Der Ausgang dieses Vergleichers wird über einen Widerstand R1 an das Gate des Kurzschlußtransistors T2 gelegt.

Dabei wird davon ausgegangen, daß im Normalbetrieb das Gate des Kurzschlußtransistors T2 durch die Überspannungsüberwachung Ü deaktiviert ist, wie durch den Schalter Sw symbolisiert. Bei einer Überspannung am Ausgang wird durch die Überspannungsüberwachung Ü die Ansteuerung durch Öffnen des Schalters Sw abgeschaltet, so daß der Ausgang des Vergleichers Op wirksam wird. Da die Ausgangsspannung höher als die Vergleichsspannung V ist, wird der Kurzschlußtransistor T2 durchgesteuert und bewirkt zunächst eine Ausgangsspannunsbegrenzung und nach dem Ansprechen der Sicherung Si eine Entladung des Kondensators C1 in die Induktivität. Daher wird zunächst, wie bisher auch, die Ladung des Kondensators abgebaut. In der Darstellung der Spannungsverläufe nach Fig. 2 ergibt sich daher bis zum Zeitpunkt t derselbe Verlauf wie ohne die Erfindung.

Sobald jedoch die Spannung an dem Kondensator C1 unter die Vergleichsspannung V sinkt, wird der Kurzschlußtransistor T2 gesperrt. Damit steigt die Spannung an dem Kurzschlußtransistor schlagartig an, bis eine Ableitdiode D1 leitend wird und den Strom der Induktivität in die Versorgungsspannung Batt ableitet. Durch die jetzt hohe Spannung an der Spule wird der Strom schnell abgebaut, so daß der Ausgangskondensator C1 nur noch wenig weiter entladen wird. Die Vergleichsspannung V wird so hoch eingestellt, daß das damit erreichte Minimum der Spannung am Ausgangskondensator sicher nicht negativ wird. Da die Spannung am Ausgangskondensator C1 weiterhin geringer als die Vergleichsspannung V ist, bleibt der Kurzschlußtransistor T2 gesperrt und die Ausgangsspannung auf dem eingestellten niedrigen Wert.

Die dargestellte Ableitung der Energie in die Speisespannungsquelle durch D1 vermeidet eine zusätzliche thermische Belastung des Kurzschlußtransistors T2. Es können aber auch andere Maßnahmen wie Varistoren oder eine Rückkopplung über eine Zenerdiode auf das Gate des Kurzschlußtransistors verwendet werden.

Anstelle der Vergleichspannungsquelle V und des Operationsverstärkers Op kann beispielsweise auch die Basis-Emitter-Strecke eines Transistors verwendet werden, die einen Vergleicher mit einer Spannung von etwa 0,7V darstellt und in der Überspannungsüberwachung Ü diese solange freigibt, wie der Transistor leitet.

Besonders gut anwendbar ist die Erfindung in Schaltspannungswandlern, bei denen ohnehin ein Schalttransistor parallel zu der Freilaufdiode D2 vorgesehen ist, der kurz nach dem Ausschalten des Schalttransistors T1 ein- und kurz vor dessen Einschalten wieder ausgeschaltet wird und der den Zweck hat, die relativ hohe Flußspannung von 0,5V der Freilaufdiode zu vermeiden und durch die wesentlich geringere Durchlaßspannung eines Transistors, insbesondere Feldeffekttransistors, zu ersetzen. Dieser Transistor kann dann gleichzeitig im Normalbetrieb, von der Steuerung St angesteuert, die Freilaufdiode D2 entlasten und im Kurzschlußfall mit höhrer Priorität von der Überwachungsschaltung Ü bzw. dem Vergleicher Op angesteuert werden.

Nicht beschrieben und dargestellt sind ferner dem Fachmann bekannte und selbstversändlich eingesetzte Mittel zur Dämpfung von Schwingungen, z.B. bei der Sperrung von Dioden, oder Serienwiderstände zur Linearisierung und Impulsbegrenzung. Gleichfalls können selbstverständlich andere Schalter und Transistoren verwendet werden.

## Patentansprüche

1. Anordnung in einem Abwärts-Schaltspannungswandler mit einem aus einer Versorgungsspannung (Batt) gespeisten Schalttransistor (T1), einer zwischen dem Schalttransistor (T1) und einem einen Verbraucher speisenden Siebkondensator (C1) liegenden Induktivität (L1), und einem vom Verbindungspunkt der Induktivität (L1) und des Schalttransistors (T1) nach Masse führenden Kurzschlußtransistor (T2), welcher zumindest durch Überspannungsüberwachung (Ü) eingeschaltet wird,
**dadurch gekennzeichnet,**
daß ein Vergleicher den durch die Überspannungsüberwachung eingeschalteten Kurzschlußtransistor ausschaltet, wenn die Ausgangsspannung einen vorgegebenen Vergleichswert (V2) unterschreitet.

2. Anordnung nach Anspruch 1, wobei der bei der Ausschaltung des Kurzschlußtransistors (T2) dort auftretende Impuls in die Speisespannung (Batt) abgeleitet wird.
